(19) Europäisches Patentamt
European Patent Office
Office européen des brevets

(11) **EP 4 761 439 A1**

(12) **EUROPEAN PATENT APPLICATION**
published in accordance with Art. 153(4) EPC

(43) Date of publication:
**17.06.2026 Bulletin 2026/25**

(21) Application number: **23948549.3**

(22) Date of filing: **10.08.2023**

(51) International Patent Classification (IPC):
*H04W 72/30* (2023.01)   *H04W 4/06* (2009.01)

(52) Cooperative Patent Classification (CPC):
**H04W 4/06; H04W 72/30**

(86) International application number:
**PCT/JP2023/029375**

(87) International publication number:
**WO 2025/032837 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **OKANO, Mayuko**
  **Tokyo 100-6150 (JP)**
• **YOSHIOKA, Shohei**
  **Tokyo 100-6150 (JP)**
• **KUMAGAI, Shinya**
  **Tokyo 100-6150 (JP)**
• **HARADA, Hiroki**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57)     According to the disclosed technology, a terminal is provided, the terminal including a reception unit configured to receive system information from a base station; and a control unit configured to set a CFR (Common Frequency Resource) related to an individual broadcast MBS (Multicast-Broadcast Services) function for a terminal whose function is reduced, based on the system information, wherein the reception unit receives a DCI (Downlink Control Information) by monitoring a search space in the CFR, and receives, from the base station, a group common PDSCH (Physical Downlink Shared Channel) scheduled by the DCI.

FIG.3

**Description**

TECHNICAL FIELD

The present invention relates to a terminal and communication method in a wireless communication system.

BACKGROUND ART

In NR (New Radio) (also referred to as 5G), which is a successor system to LTE (Long Term Evolution), technologies that satisfy requirements such as a large-capacity system, high-speed data transmission rate, low delay, simultaneous connection of a large number of terminals, low cost, and power saving are being studied (e.g., Non-Patent Literature 1).

In LTE or NR, a UE category or UE capability for Internet of Things (IoT) is defined in which functions to be supported as mandatory by ordinary terminals, for example, functions related to transmission/reception bandwidth and the number of antennas, are reduced. For example, eMTC (enhanced machine type communication) and NB-IoT (narrow band IoT) are defined in LTE, and RedCap (reduced capability) is defined in NR.

Further, studies on future systems beyond 5G or 6G have started. Further improvements in communication performance and diversification of use cases are expected in these future systems.

CITATION LIST

Non-Patent Literature

Non-Patent Literature 1: 3GPP TS 38.300 V17.5.0(2023-06)
Non-Patent Literature 2: 3GPP TS 38.213 V17.6.0(2023-06)
Non-Patent Literature 3: 3GPP TS 38.214 V17.6.0(2023-06)
Non-Patent Literature 4: 3GPP TS 38.331 V17.5.0(2023-06)
Non-Patent Literature 5: 3GPP TS 38.321 V17.5.0(2023-06)

SUMMARY OF INVENTION

TECHNICAL PROBLEM

In the future system (e.g., NR release 18 and NR successor 6G), eRedCap (enhanced reduced capability) with further reduced functions than RedCap studied in NR release 17 is being studied. For example, the baseband processing capability of an eRedCap terminal is limited. Here, there is a possibility that a channel with a bandwidth exceeding the baseband processing capability cannot be transmitted or received appropriately.

Further, NR supports the MBS (Multicast-Broadcast Services) function. The MBS function configures a Common Frequency Resource (CFR), and a single DL transmission is received by multiple UEs on the CFR. Here, when the eRedCap terminal supports the MBS function, an appropriate operation is required in consideration of the processing capability.

In view of the above, it is an object of the present invention to provide a wireless communication system in which a terminal having reduced functions supports MBS (Multicast-Broadcast Services) functions.

SOLUTION TO PROBLEM

According to the disclosed technology, a terminal is provided, the terminal including a reception unit configured to receive system information from a base station; and a control unit configured to set a CFR (Common Frequency Resource) related to an individual broadcast MBS (Multicast-Broadcast Services) function for a terminal whose function is reduced, based on the system information, wherein the reception unit receives a DCI (Downlink Control Information) by monitoring a search space in the CFR, and receives, from the base station, a group common PDSCH (Physical Downlink Shared Channel) scheduled by the DCI.

ADVANTAGEOUS EFFECTS OF INVENTION

In accordance with the disclosed technique, a reduced-function terminal can support MBS (Multicast-Broadcast Services) functions in a wireless communication system.

BRIEF DESCRIPTION OF DRAWINGS

[FIG. 1] FIG. 1 is a diagram showing an example of a configuration of a wireless communication system.
[FIG. 2] FIG. 2 is a diagram showing an example of an MBS function according to an embodiment of the present invention.
[FIG. 3] FIG. 3 is a diagram showing an example of a CFR according to an embodiment of the present invention.
[FIG. 4] FIG. 4 is a diagram showing an example of a broadcast according to an embodiment of the present invention.
[FIG. 5] FIG. 5 is a diagram showing an example (1) of multiplexing according to an embodiment of the present invention.
[FIG. 6] FIG. 6 is a diagram showing an example (2) of multiplexing according to an embodiment of the present invention.
[FIG. 7] FIG. 7 is a diagram showing an example of HARQ feedback according to an embodiment of the present invention.
[FIG. 8] FIG. 8 is a diagram showing an example of a functional configuration of a base station 10 according to an embodiment of the present invention.
[FIG. 9] FIG. 9 is a diagram showing an example of a functional configuration of a terminal 20 according to an embodiment of the present invention.
[FIG. 10] FIG. 10 is a diagram showing an example of a hardware configuration of the base station 10 or the terminal 20 according to an embodiment of the present invention.
[FIG. 11] FIG. 11 is a diagram showing an example of a configuration of a vehicle 2001 according to an embodiment of the present invention.

DESCRIPTION OF EMBODIMENTS

Hereinafter, an embodiment of the present invention will be described with reference to the drawings. Incidentally, the embodiments described below are only examples, and the embodiments to which the present invention is applied are not limited to the following embodiments.

In the operation of the wireless communication system of the embodiment of the present invention, an existing technology is appropriately used. However, the existing technology is, for example, an existing LTE, but is not limited to the existing LTE. Further, the term "LTE " used in the present specification has a broad meaning including LTE-Advanced and systems after LTE-Advanced (e.g., NR) unless otherwise specified.

In the embodiments of the present invention described below, terms such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), and PUSCH (Physical Uplink Shared Channel) used in the existing LTE are used. This is for convenience of description, and signals, functions, etc. similar to these may be called by other names. The above-mentioned terms in NR correspond to NR-SS, NR-PSS, NR-SSS, NR-PBCH, NR-PRACH, etc. However, even a signal used in NR is not necessarily specified as "NR- ".

In the embodiment of the present invention, the duplex system may be a TDD (Time Division Duplex) system, an FDD (Frequency Division Duplex) system, or another system (e.g., Flexible Duplex, etc.).

In the embodiment of the present invention, "configure" a radio parameter or the like may mean that a predetermined value is pre-configured or that a radio parameter notified from the base station 10 or the terminal 20 is set.

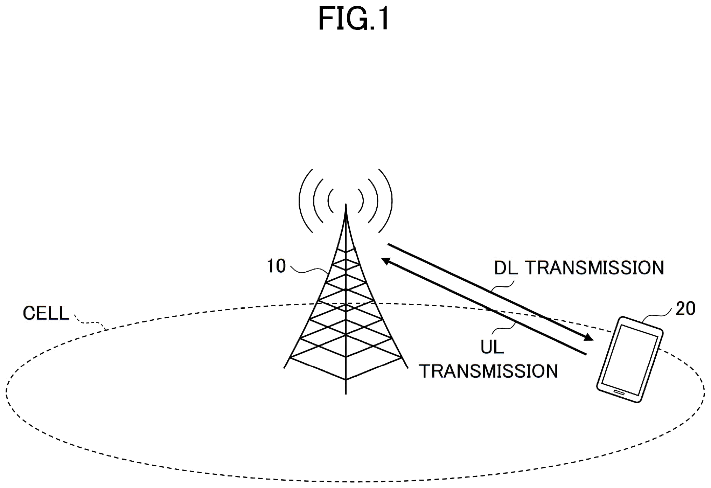

FIG. 1 is a diagram showing a configuration example (1) of a wireless communication system according to an embodiment of the present invention. As shown in FIG. 1, the wireless communication system according to an embodiment of the present invention includes a base station 10 and a terminal 20. Although one base station 10 and one terminal 20 are shown in FIG. 1, this is an example, and a plurality of each may be used.

The base station 10 is a communication device which provides one or more cells and performs wireless communication with the terminal 20. The physical resources of the wireless signal are defined by a time domain and a frequency domain, the time domain may be defined by the number of OFDM (Orthogonal Frequency Division Multiplexing) symbols, and the frequency domain may be defined by the number of subcarriers or the number of resource blocks. The base station 10 transmits a synchronization signal and system information to the terminal 20. The synchronization signal is, for example, NR-PSS and NR-SSS. The system information is transmitted, for example, by NR-PBCH and is also referred to as broadcast information. The synchronization signal and the system information may be referred to as an SSB (SS/PBCH block). As shown in FIG. 1, the base station 10 transmits a control signal or data to the terminal 20 by DL (Downlink) and receives a control signal or data from the terminal 20 by UL (Uplink). Both the base station 10 and the terminal 20 can transmit and receive signals by beamforming. Both the base station 10 and the terminal 20 can apply communication by MIMO (Multiple Input Multiple Output) to DL or UL. Both the base station 10 and the terminal 20 may communicate via a secondary cell (SCell) and a primary cell (PCell) by CA (Carrier Aggregation). Further, the terminal 20 may communicate via a primary cell of the base station 10 and a primary secondary cell group cell (PSCell Primary SCG Cell) of another base station 10 by DC (Dual Connectivity).

The terminal 20 is a communication device having a wireless communication function such as a smartphone, a cellular phone, a tablet, a wearable terminal, and a communication module for M2M (Machine-to-Machine). As shown in FIG. 1, the terminal 20 receives a control signal or data from the base station 10 by DL and transmits the control signal or data to the base station 10 by UL, thereby utilizing various communication services provided by the wireless communication system. Further, the terminal 20 receives various reference signals transmitted from the base station 10 and measures the propagation path quality based on the reception result of the reference signals.

The terminal 20 can perform carrier aggregation by bundling a plurality of cells (Multiple CCs (Component Carrier)) to communicate with the base station 10. In carrier aggregation, 1 PCell (Primary cell) and 1 or more SCells (Secondary cell) are used. PUCCH-SCell with PUCCH may be used.

First, RedCap of the conventional NR release 17 will be described. The maximum bandwidth supported by RedCapUE under consideration in NR release 17 is 20 MHz in FR1 (Frequency Range 1) and 100 MHz in FR2 (Frequency Range 2). RedCapUE is required to coexist with non-RedCapUE in the system.

RedCapUE and non-RedCapUE may share the same initials DL-BWP (Include subcarrier spacing, bandwidth and location) set by MIB (Master Information Block). On the other hand, an initial DL-BWP (Downlink Bandwidth part) with separated or additional subcarrier spacing, bandwidth, and location for RedCapUE may be configured.

RedCapUE may share an initial DL-BWP(Hereinafter, it is also referred to as "DL-BWP #0 ".) for non-RedCapUE if it does not exceed the maximum bandwidth supported by RedCapUE.

Also, according to the NR Release 17 technical specification, DL-BWP and UL-BWP of the same index must have the same center frequency in the case of TDD to avoid RF retuning.

RedCapUE also assumes that after establishing or re-establishing a dedicated RRC connection, the initial DL-BWP and active DL-BWP will be less than or equal to the maximum DL bandwidth supported by RedCapUE. RedCapUE is provided a DL-BWP by the "initialDownlinkBWP" in the "DownlinkConfigCommonRedCapSIB" and a UL-BWP by the "initialUplinkBWP" in the "UplinkConfigCommonRedCapSIB". If the "initialUplinkBWP" in the "UplinkConfigCommonSIB" indicates a UL-BWP greater than the maximum UL-BWP supported by RedCapUE, RedCapUE assumes that the UL-BWP is provided by the "initialUplinkBWP" in the "UplinkConfigCommonRedCapSIB".

The RedCapUE may be provided with a DL-BWP other than the initial DL-BWP by "BWP-DownlinkDedicated." The RedCapUE may be provided with a UL-BWP other than the initial UL-BWP by "BWP-UplinkDedicated" which is less than or equal to the maximum UL bandwidth supported by the RedCapUE.

If the RedCapUE is provided with "RACH-ConfigCommon-RedCap" or "RACH-ConfigCommonTwoStepRA-RedCap," the RedCapUE uses the corresponding parameters to perform the initial access and random access procedures. Otherwise, the RedCapUE uses the corresponding parameters provided by "RACH-ConfigCommon" or "RACH-ConfigCommonTwoStepRA."

If the RedCapUE is provided with "initialUplinkBWP" in "UplinkConfigCommonRedCapSIB" and there is no dedicated PUCCH resource configuration, it uses the PUCCH resource set provided by "pucch-ResourceCommonRedCap" to transmit PUCCH using HARQ-ACK information. Note that if "disable-FH-PUCCH" is provided in "PUCCH-ConfigCommonRedCap," PUCCH transmission is disabled.

For the initial DL-BWP provided by "initialDownlinkBWP" in "DownlinkConfigCommonRedCapSIB," the RedCapUE recognizes that the initial DL-BWP does not contain SS/PBCH block or CORESET (Control resource set) of index 0 if it monitors PDCCH according to CSS (Common search space) set of Type 1-PDCCH and does not monitor PDCCH according to CSS set of Type2-PDCCH.

When monitoring PDCCH according to the CSS set of Type2-PDCCH, RedCapUE assumes that the initial DL-BWP includes the SS/PBCH block and CORESET at index 0 if RedCapUE used the SS/PBCH block to acquire SIB1, and does not include CORESET at index 0 if the initial DL-BWP includes the SS/PBCH block and does not include the SS/PBCH block used by RedCapUE to acquire SIB1.

In the case of active DL-BWP provided by "BWP-DownlinkDedicated," RedCapUE assumes that the active DL-BWP includes the SS/PBCH block and does not include CORESET at index 0, except when indicating the capability to operate on the DL-BWP without receiving the SS/PBCH block.

Next, the RedCap consideration status for NR Release 18 is described. For NR Release 18, eRedCap is considered in order to further reduce the complexity of RedCapUE for NR Release 17. Hereinafter, the reduced-function terminal for NR Release 17 is referred to as RedCapUE, and the extended-function reduced-function terminal for NR Release 18 is referred to as eRedCapUE. RedCapUE is an example of the first reduced-function terminal. eRedCapUE is an example of the second reduced-function terminal. That is, the first reduced-function terminal is a terminal with a reduced first function, and the second reduced-function terminal is a terminal with a reduced second function that is different from the first function (including some overlap).

Network impact, co-existence of RedCapUE or eRedCapUE with non-RedCapUE in a cell, UE impact, specification impact, etc. are considered. Potential solutions to reduce device complexity, which may complement each other, focus on:

As a first solution, reducing the UE bandwidth at FR1 to 5 MHz is considered. This solution may be specified in conjunction with relaxed UE processing timelines for PDSCH and/or PUSCH and/or CSI.

As a second solution, reducing the UE peak data rate at FR1 is considered. This solution may include limited bandwidth for PDSCH and/or PUSCH and may be specified in the technical specification in conjunction with relaxed UE processing timelines for PDSCH and/or PUSCH and/or CSI.

For eRedCapUE, it is considered necessary to take care of the following: The SSB specified in NR release 15 should be reused and L1 changes should be minimized. Further, BWP operation with/without SSB and with/without RF retuning should be considered. Furthermore, it is considered not to exclude that some solutions of FR1 can be applied to FR2. To further reduce the complexity of UE, it is considered to define a single type of reduced-function terminal for release 18.

eRedCapUE may be defined as follows.

For example, a terminal 20 that reports that its device is eRedCapUE by at least one of Msg1, Msg3, and MsgA in the random access procedure may be defined as eRedCapUE. For example, an eRedCapUE may send Msg1 or MsgA in a resource specified or configured for an eRedCapUE, or may notify that it is an eRedCapUE in a notification field in Msg3 specified for an eRedCapUE.

For example, a terminal 20 that supports a particular UE capability may be defined as an eRedCapUE. The particular UE capability may be, for example, 1) - 7) shown below.

    1) Support up to 5 MHz bandwidth for PDSCH and PUSCH in FR1.
    2) Support relaxed UE processing time for PDSCH, PUSCH and/or CSI.
    3) Support reduced UE peak data rate in FR1.
    4) Support 1 or 2 receive branches and corresponding maximum number of DL-MIMO layers.
    5) Support FD (Full Duplex)-FDD or Type A HD (Half Duplex)-FDD in FR1FDD band.
    6) The FR1 shall support 64QAM (quadrature amplitude modulation) or 256QAM.
    7) Carrier aggregation or dual connectivity shall not be supported.

The terminal 20 which has reported to the base station 10 that it supports the specific UE capability by the UE capability report may be defined as an eRedCapUE. The existing terminal may be a terminal other than an eRedCapUE.

Further, the eRedCap terminal may support the operation shown in 1) - 5) below in order to reduce the complexity related to the UE-BB.

    1) It may be possible to receive DL allocation included in a DCI that allocates unicast PDSCH resources with a bandwidth exceeding 5 MHz.
    2) For broadcast PDSCH carrying SIB1, the scheduling of SIB1 may exceed 5 MHz as in legacy operation.
    3) For broadcast PDSCH carrying OSI (Other System Information), OSI scheduling may exceed 5 MHz as in legacy operation.
    4) For broadcast PDSCH carrying RAR (Random Access Response), RAR-PDSCH scheduling may exceed the maximum number of unicast PRBs that an eRedCap terminal can handle per slot.
    5) For broadcast PDSCH carrying paging, paging channel scheduling may exceed 5 MHz as in legacy operation.

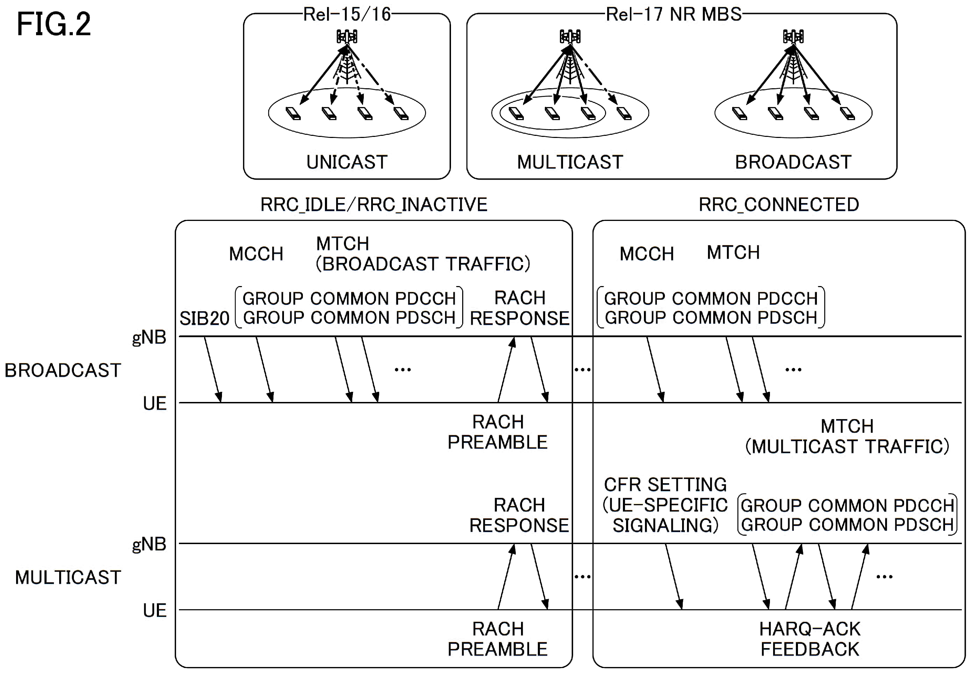

FIG. 2 is a diagram showing an example of the MBS function according to an embodiment of the present invention. In NR releases 15 and 16, only unicast was supported. In NR release 17, NR-MBS was introduced to support multicast and broadcast.

As shown in FIG. 2, in the RRC_IDLE state and the RRC_INACTIVE state, the UE receives the SIB20 to set the MBS (Multicast-Broadcast Services) function, and the gNB can transmit MCCH (MBS Control Channel) and MTCH (MBS Traffic Channel), which are logical channels, to the UE via the group common PDCCH and the group common PDSCH. MTCH carries broadcast traffic.

UR sends a RACH preamble to gNB, and gNB sends a RACH response to UE, which enables multicast traffic in addition to broadcast when the state is changed to RRC_CONNECTED. CFR (Common Frequency Resource) settings are sent from gNB to UE by UE-specific signaling. UE receives MTCH carrying multicast traffic via group common PDCCH and group common PDSCH, and sends HARQ-ACK feedback to gNB.

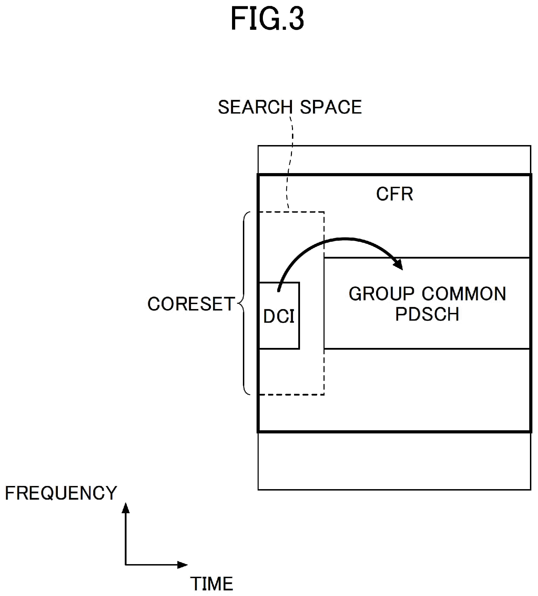

FIG. 3 is a diagram showing an example of CFR according to an embodiment of the present invention. As shown in FIG. 3, search spaces and group common PDSCH are arranged in CFR (Common Frequency Resource). The type of search space is type 0 or type 0B-CSS for broadcast, and type 3-CSS for multicast. The monitoring priority of the CSS is determined based on the index of the search space set. CORESET is set in CFR.

The DCI arranged in the search space schedules the group common PDSCH. For the DCI format, DCI format 4_0 is used for broadcast, and DCI format 4_1 or 4_2 is used for multicast. The "3+1" DCI size budget is maintained.

For RNTI (Radio Network Temporary Identifier), for broadcast, MCCH-RNTI is used to schedule MCCH, and G-RNTI is used to schedule MTCH (see Non-Patent Literature 5). For multicast, G-RNTI is used for dynamic scheduling, and G-CS-RNTI is used for semi-persistent scheduling (see Non-Patent Literature 5).

The group common PDSCH may support 1)-3) shown below for broadcast.

1) Semi-persistent or dynamic repeated slot level transmission.
2) RB symbol level rate matching.
3) RE level rate matching. E.g. LTE-CRS.

The group common PDSCH MAY support 1)-3) as described below for multicast.

1) Semi-persistent or dynamic slot level repetitive transmission.
2) RB symbol level rate matching.
3) RE level rate matching. For example, LTE-CRS and ZP CSI-RS.

Here, the operation when the eRedCap terminal supports the MBS function, that is, the operation for receiving broadcast PDSCH and/or multicast PDSCH, is unclear, and it is necessary to specify an appropriate operation in consideration of the processing capability of the eRedCap terminal.

Note that RedCap in the embodiment of the present invention may be replaced by eRedCap. eRedCap in the embodiment of the present invention may be replaced by RedCap. RedCap in the embodiment of the present invention may be replaced by first RedCap. eRedCap in the embodiment of the present invention may be replaced by second RedCap.

One CFR to which a broadcast MBS-PDSCH and a DCI for scheduling the PDSCH are transmitted is set for a cell. A broadcast CFR may have the characteristics shown in 1)-4) below.

1) Any bandwidth within the carrier bandwidth may be set as the CFR.
2) The CFR fully includes CORESET#0.
3) The same SCS and CP as the initial BWP are used.
4) One CORESET other than CORESET#0 may be set.

On the other hand, different initial BWPs may be set for RedCap and/or eRedCap terminals and non-RedCap and/or non-eRedCap terminals. Initial BWPs for RedCap or eRedCap terminals set separately from non-RedCap and/or non-eRedCap terminals may be called separate initial BWPs for RedCap and/or eRedCap. The separate initial BWPs for RedCap and/or eRedCap may or may not include a band for which CORESET#0 is set.

Therefore, it may be clarified how the CFR is set in a cell that accommodates RedCap and/or eRedCap terminals and non-RedCap and/or non-eRedCap terminals.

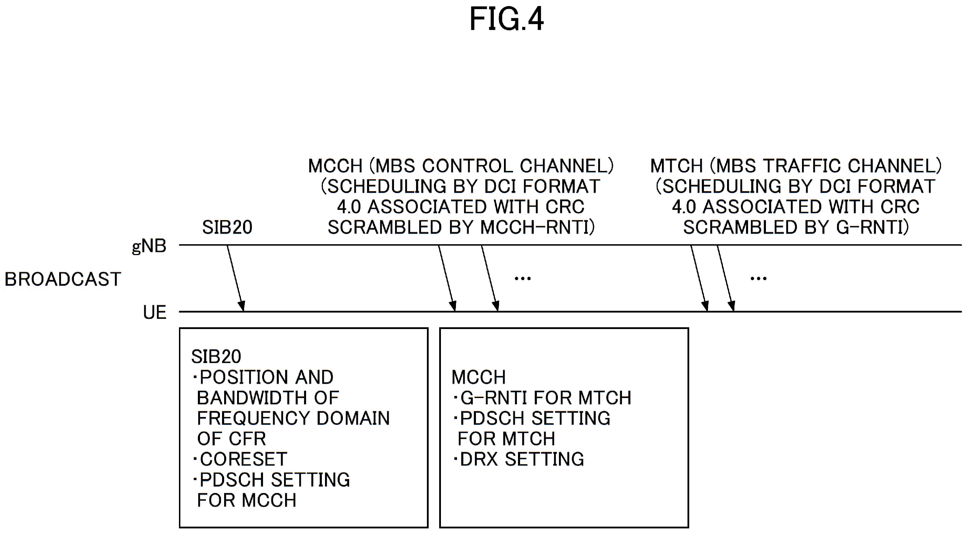

FIG. 4 is a diagram showing an example of a broadcast according to an embodiment of the present invention. As shown in FIG. 4, the UE receives the SIB20 from the gNB. The SIB20 may include information regarding the position and bandwidth (information element locationAndBandwidth) of the frequency domain of the CFR, CORESET, and PDSCH setting for MCCH.

The MCCH is an MBS control channel and is scheduled by DCI format 4_0 with CRC scrambled by MCCH-RNTI. The MCCH may include G-RNTI for MTCH, PDSCH setting for MTCH, and DRX setting. The MTCH is an MBS traffic channel and is scheduled by DCI format 4_0 with CRC scrambled by G-RNTI. The UE receives the MCCH and receives the MTCH based on the DCI format 4_0 received via the MCCH.

A separate CFR may be configured for broadcast MBS for RedCap and/or eRedCap terminals. For example, one or more CFRs for the separate broadcast MBS may be configured for a cell.

For example, the CFR for the separate broadcast MBS may be configured in SIB20. The LocationAndbandwidth parameter of the CFR may be interpreted by RedCap and/or eRedCap terminals as a configuration in the RedCap and/or eRedCap individual initial BWP.

The CFR for the separate broadcast MBS for RedCap and/or eRedCap terminals may be assumed to be configured in the band of the RedCap and/or eRedCap individual initial BWP. The CFR for the separate broadcast MBS for RedCap and/or eRedCap terminals may be assumed to be configured to include the band of the RedCap and/or eRedCap individual initial BWP.

The CFR for the individual broadcast MBS for RedCap and/or eRedCap terminals may or may not include the bandwidth of the initial BWP for non-RedCap and/or non-eRedCap terminals. The CFR for the individual broadcast MBS for RedCap and/or eRedCap terminals may or may not include CORESET#0.

If the CFR for the individual broadcast MBS for RedCap and/or eRedCap terminals is not set, RedCap and/or eRedCap terminals may use the CFR set for non-RedCap and/or non-eRedCap terminals and need not expect to receive DCI format 4_0, MCCH and MTCH.

A separate CORESET may also be set for broadcast MBS for RedCap and/or eRedCap terminals. The separate CORESET for RedCap and/or eRedCap terminals may be set by SIB20. The separate CORESET for RedCap and/or eRedCap terminals may be assumed to be set within the band of the RedCap and/or eRedCap individual initials BWP.

The individual CORESET for the RedCap and/or eRedCap terminal may be included in the individual CFR for the RedCap and/or eRedCap terminal, or may be included in the CFR shared with the non-RedCap and/or non-eRedCap terminal.

If the individual CORESET for the RedCap and/or eRedCap terminal is not set, the RedCap and/or eRedCap terminal may use the CORESET or CORESET#0 set for the non-RedCap and/or non-eRedCap terminal.

Note that the CFR may be set to include the initial BWP and/or the individual initial BWP for the RedCap and/or eRedCap terminal. Note that the CFR need not include the CORESET#0 if it does not include the initial BWP for the non-RedCap and/or non-eRedCap terminal.

Note that if the individual initial BWP is set for the RedCap and/or eRedCap terminal, the RedCap and/or eRedCap terminal need not assume setting of the CFR, reception of the DCI format 4_0, MCCH and MTCH. For example, it may be assumed that the RedCap and/or eRedCap terminal may be set to set the CFR, reception of the DCI format 4_0, MCCH and MTCH only if it shares the initial BWP with the non-RedCap terminal.

In the case where an individual initial BWP is set for the RedCap and/or eRedCap terminal and the individual initial BWP does not include CORESET#0, the RedCap and/or eRedCap terminal need not assume setting of CFR, reception of DCI format 4_0, MCCH and MTCH.

Further, it may be assumed that MCCH-RNTI and/or G-RNTI of each RedCap and/or eRedCap terminal are specified or set, and the RedCap and/or eRedCap terminal scrambles DCI format 4_0 by the RNTI.

It may be assumed that DCI format of each RedCap and/or eRedCap terminal is specified or set, and the RedCap and/or eRedCap terminal schedules MCCH and MTCH by the DCI format.

It may be assumed that CSS of each RedCap and/or eRedCap terminal is specified or set, and the RedCap and/or eRedCap terminal transmits DCI format 4_0 in the CSS.

With the above-described operation, MCCH and MTCH can be scheduled individually for each RedCap and/or eRedCap terminal, and band limitation operation of the RedCap and/or eRedCap terminal can be avoided for non-RedCap and/or non-eRedCap terminals.

For the eRedCap terminal, the PDSCH or PUSCH bandwidth that can be processed per slot is limited to 5 MHz. In order to perform PDSCH reception processing, i.e., PDSCH decoding and ACK/NACK transmission preparation, with the same PDSCH processing time as for the existing terminal, the number of RBs exceeding 5 MHz cannot be allocated to the unicast PDSCH for the eRedCap terminal.

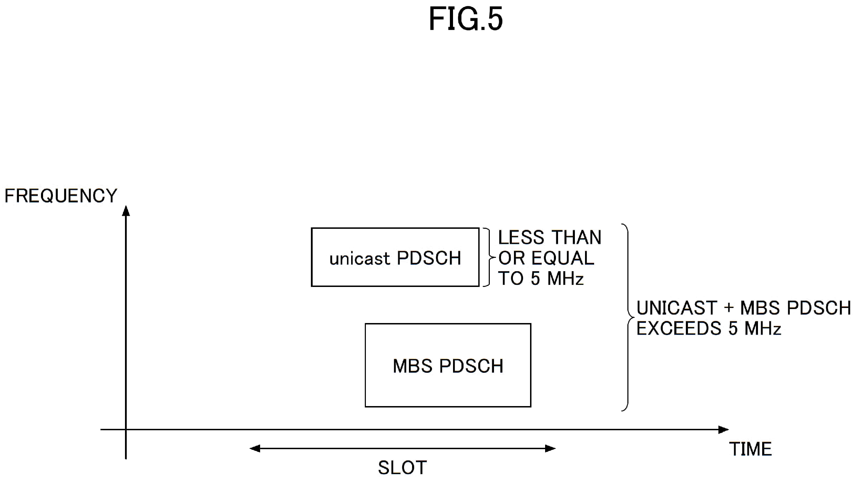

FIG. 5 is a diagram showing an example (1) of multiplexing according to an embodiment of the present invention. As shown in FIG. 5, for the existing terminal, one unicast PDSCH and a broadcast MBS-PDSCH or a multicast MBS-PDSCH can be frequency multiplexed in the same slot with overlapping time resources.

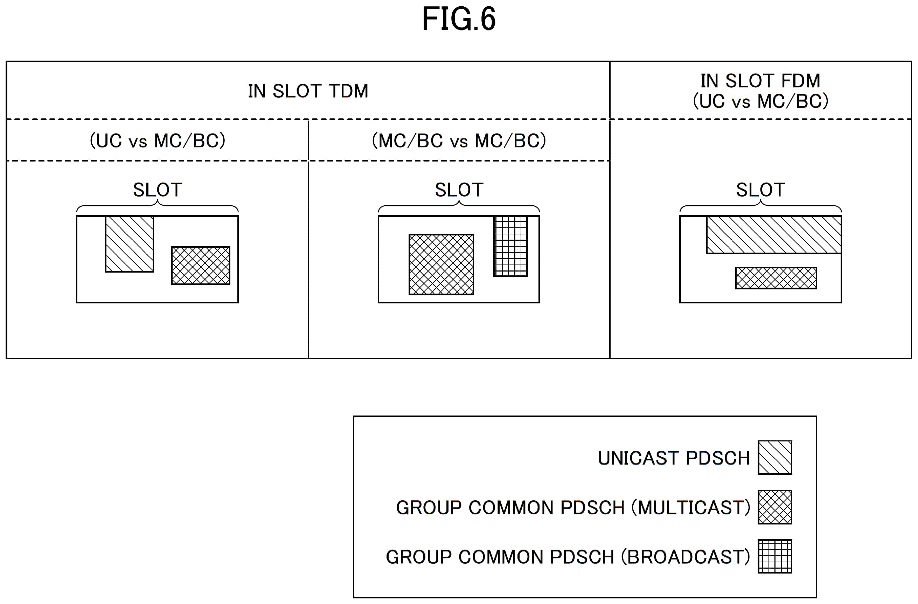

FIG. 6 is a diagram showing an example (2) of multiplexing according to an embodiment of the present invention. As shown in FIG. 6, a unicast PDSCH and an MBS-PDSCH can be TDM (time division multiplexing) or FDM (frequency division multiplexing) in a slot. For example, a unicast PDSCH and a multicast or broadcast group common PDSCH can be time division multiplexed in a slot. For example, a multicast or broadcast group common PDSCH and a multicast or broadcast group common PDSCH can be time division multiplexed in a slot. For example, a unicast PDSCH and a multicast or broadcast group common PDSCH may be frequency division multiplexed within a slot.

Here, even if the unicast PDSCH does not exceed 5 MHz, the frequency multiplexing of a plurality of PDSCH within a slot must be appropriately set in consideration of the processing capability of the eRedCap terminal, such as when the PDSCH band, i.e., the number of RBs, exceeds 5 MHz when the sum of the unicast PDSCH and the broadcast MBS-PDSCH or the multicast MBS-PDSCH multiplexed within the same slot is added.

Therefore, restrictions on multiplexing a plurality of PDSCH within the same slot and/or adjacent slots may be prescribed for the eRedCap terminal.

The unicast PDSCH may be a PDSCH scheduled by a DCI having a CRC scheduled by at least one of C-RNTI, MCS-C-RNTI, or CS-RNTI, or a scrambled CRC, and the RNTI is not limited thereto.

The broadcast MBS-PDSCH may be a PDSCH scheduled by a DCI having a CRC scheduled by at least one of MCCH-RNTI or G-RNTI, or a scrambled CRC, and the RNTI is not limited thereto. The broadcast MBS-PDSCH may be an MCCH or an MTCH.

The multicast MBS-PDSCH may be a PDSCH scheduled by at least one of G-RNTI, G-CS-RNTI, or DCI with scrambled CRC, but is not limited to RNTI.

For multiplexing within a slot, the frequency-multiplexed PDSCH may overlap partially in the time domain, overlap entirely in the time domain, or may be specified to be multiplexed within a slot even if the time domain does not overlap when scheduled within the same slot.

The eRedCap terminal may execute Option 1) or Option 2) as shown below with respect to restrictions on multiplexing of multiple PDSCH within the same slot and/or adjacent slots.

Option 1) The eRedCap terminal may assume that any two PDSCH among unicast PDSCH, broadcast MBS-PDSCH, and multicast MBS-PDSCH may be scheduled within the same slot and/or adjacent slots. For example, it may be assumed that a total of more than 5 MHz may be scheduled, or it may be assumed that a total of less than 5 MHz may be scheduled.

Here, 5 MHz may correspond to 25RB in the case of 15 kHz SCS and 12RB in the case of 30 kHz SCS. That is, exceeding 5 MHz may be 26RB or more in the case of 15 kHz SCS and 13RB or more in the case of 30 kHz SCS.

When any 2 PDSCH among unicast PDSCH, broadcast MBS-PDSCH and multicast MBS-PDSCH are scheduled exceeding 5 MHz in total, the eRedCap terminal may execute the operation shown in 1)-8) below.

1) The eRedCap terminal need not receive either or both PDSCH.
2) The eRedCap terminal need not decode either or both PDSCH.
3) The eRedCap terminal may send NACK to either or both PDSCH.
4) The eRedCap terminal need not expect other PDSCH to be scheduled in adjacent N slots. N may be one of 1, 2, 3 or 4. The other PDSCH may be a unicast PDSCH, a broadcast MBS-PDSCH, a multicast MBS-PDSCH, or other SI-RNTI, P-RNTI, RA-RNTI, MSGB-RNTI, TC-RNTI scheduled PDSCH.
5) The eRedCap terminal may decode both PDSCH.
6) The eRedCap terminal may receive both PDSCH.
7) The eRedCap terminal may specify a priority to determine from which PDSCH to receive, decode and/or process. For example, a higher priority PDSCH may always be received, decoded and/or processed and a lower priority PDSCH may be received, decoded and/or processed. A NACK may be fed back for PDSCH not received, decoded and/or processed. A higher priority PDSCH may follow an existing HARQ feedback timeline and a lower priority PDSCH may have an extended HARQ feedback timeline. For example, a timeline related to HARQ feedback of a PDSCH with a low priority may be extended. For example, a priority may be set for each PDSCH, and it may be determined which PDSCH to receive, decode, and/or process from by comparing the priorities.
8) A timeline related to HARQ feedback of a unicast PDSCH and/or a multicast MBS-PDSCH may be extended. For example, one slot may be added to an existing timeline as a timeline.

The above is Option 1).

Option 2) The eRedCap terminal need not assume that any two or more of a unicast PDSCH, a broadcast MBS-PDSCH, and a multicast MBS-PDSCH are scheduled in the same slot and/or in adjacent slots.

The above is Option 2).

Depending on whether HARQ feedback is enabled or disabled for multicast MBS-PDSCH, a decision may be made as to whether Option 1) or Option 2) is to be performed. Signaling of UE capability indicating whether Option 1) and/or Option 2) are supported may be specified.

For example, the operations described in 1)-3) below may be performed.

1) The eRedCap terminal may assume that unicast PDSCH and broadcast MBS-PDSCH may be scheduled to the same slot for a total of more than 5 MHz.
2) The eRedCap terminal may assume that unicast PDSCH and multicast MBS-PDSCH when HARQ feedback is disabled may be scheduled to the same slot and/or adjacent slots for a total of more than 5 MHz.
3) The eRedCap terminal may assume that the multicast MBS-PDSCH and the broadcast MBS-PDSCH when HARQ feedback is disabled may be scheduled in the same slot and/or adjacent slots for a total of more than 5 MHz.

In common with the above 1)-3), both PDSCH may be received and/or decoded, which PDSCH or both PDSCH to receive and/or decode may be different depending on the UE capability, which PDSCH or both PDSCH to receive and/or decode may be determined based on the UE capability, and the priority of which PDSCH to receive and/or decode may be specified in the technical specification.

Further, in the above 1) - 3), it may be assumed that no other PDSCH is scheduled in the adjacent slot.

If the operation is supported, a UE capability indicating that the operation is supported may be reported.

Further, the eRedCap terminal does not need to assume that unicast PDSCH and multicast MBS-PDSCH when HARQ feedback is enabled may be scheduled in the same slot and/or the adjacent slot for a total of more than 5 MHz.

The eRedCap terminal does not need to assume that the multicast MBS-PDSCH and the broadcast MBS-PDSCH when the HARQ feedback is enabled can be scheduled in the same slot and/or adjacent slots for a total of more than 5 MHz.

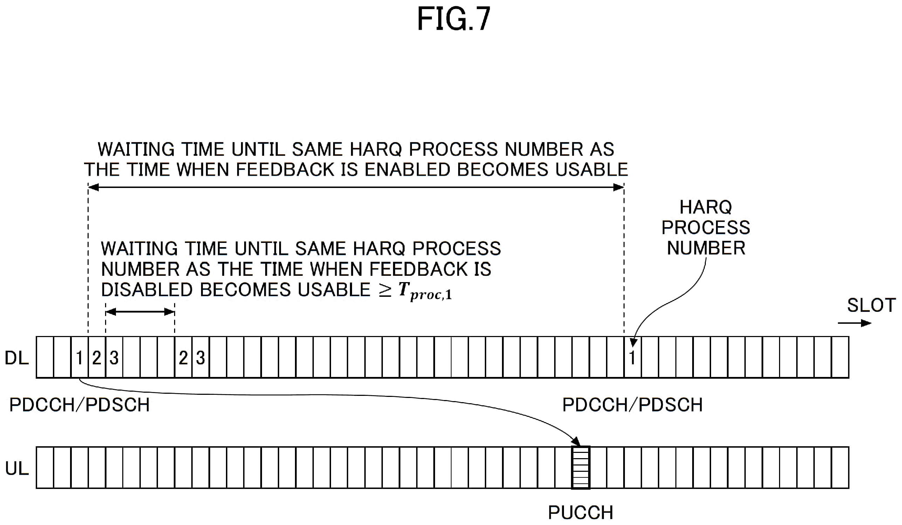

FIG. 7 is a diagram showing an example of the HARQ feedback according to the embodiment of the present invention. As shown in FIG. 7, when the HARQ feedback is disabled for the PDSCH in the NTN (Non-terrestrial network), the HPN (HARQ process number) can be used again after the processing time Tproc, 1 related to the reception of the PDSCH has elapsed. As shown in FIG. 7, when the HARQ feedback is enabled, the HPN can be used again after the PUCCH carrying the HARQ feedback is received.

Here, the HPN is assigned to the multicast MBS-PDSCH scheduled by the G-RNTI or the G-CS-RNTI. Since the HARQ feedback can be disabled for the multicast MBS-PDSCH, the network cannot know when the HPN assigned to the PDSCH can be reused.

Furthermore, the eRedCap terminal needs to assume a processing time different from that of the existing terminal when a resource exceeding 5 MHz is allocated for the multicast MBS-PDSCH.

Therefore, when the HARQ feedback of the multicast MBS-PDSCH is disabled for the eRedCap terminal, the time until the release of the HPN of the PDSCH may be extended to Tproc, 1+X. The extended time until the release of the HPN of the PDSCH may be applied to the case shown in 1) or 2) below, but is not limited thereto. That is, when the HARQ feedback of the multicast MBS-PDSCH is disabled for the eRedCap terminal, the time until the release of the HPN of the PDSCH may be extended from the processing time Tproc, 1 related to the reception of the PDSCH.

1) This may be applied when the bandwidth of the multicast MBS-PDSCH exceeds 5 MHz.

2) This may be applied when the total bandwidth of the multicast MBS-PDSCH and the PDSCH multiplexed in the same slot exceeds 5 MHz.

The unit of the value of X may be any one of microseconds, milliseconds, symbols, and slots, but is not limited thereto. X may be 1 slot. For example, $T_{proc,1}$+1 ms may be applied to the case of 15 kHz SCS, and $T_{proc,1}$+0.5 ms may be applied to the case of 30 kHz SCS.

The value of X may be different depending on the SCS of the PDSCH, or may be determined based on the SCS of the PDSCH. For example, X=X' in the case of 15 kHz SCS, and X=2X' in the case of 30 kHz SCS. The value of X may be different depending on the UE capability.

The value of X may be different depending on the bandwidth of the multicast MBS-PDSCH, or may be determined based on the bandwidth. For example, it may be defined or determined as shown in 1) - 4) below.

1)

$$X=X' \times N\_MuliticastPDSCH$$

2)

$$X=X' \times N\_MuliticastPDSCH/N\_XRB$$

3)

$$X=X' \times [N\_MuliticastPDSCH/N\_XRB]$$

4)

$$X=X1$$

when $0 < N\_MuliticastPDSCH \leq N\_RB1$, $X=X2$ when $N\_RB1 < N\_MuliticastPDSCH \leq N\_RB2$, $\cdots$ when $N\_RBn\text{-}1 < N\_MuliticastPDSCH \leq N\_RBn$, $X=Xn$

Note that $X=X' \times Floor (N\_MuliticastPDSCH/N\_XRB)$ or $X=X' \times Ceil (N\_MuliticastPDSCH/N\_XRB)$ may be used.

Note that N_MuliticastPDSCH may be the number of RBs allocated to the multicast MBS-PDSCH. N_XRB may be the number of RBs corresponding to 5 MHz (25RB for 15 kHz SCS, 12RB for 30 kHz SCS) or the number of RBs specified in other technical specifications.

$X'>0$ may be satisfied. The unit of the value of X' may be one of microseconds, milliseconds, symbols, and slots, but is not limited thereto.

As for the value of X, a single value may be specified in the technical specification without depending on the SCS and/or PDSCH bandwidth.

Further, for example, when the HARQ feedback of the multicast MBS-PDSCH is disabled for the eRedCap terminal, with respect to the time until the release of the HPN of the PDSCH, $T_{proc,\,1}$ may be multiplied by a constant value, and may be expanded to, for example, $X \times T_{proc,\,1}$.

Further, when the HARQ feedback of the multicast MBS-PDSCH is disabled for the eRedCap terminal, the HPN field need not be assumed for the DCI for scheduling the PDSCH. The HPN field may be assumed to be 0 bits, or the value reported in the HPN field may be ignored.

According to the embodiment described above, the terminal 20 as an eRedCapUE can individually set a CFR corresponding to the terminal capability and receive the transmission from the base station 10 by the MBS function. Further, the eRedCap terminal can appropriately receive the multiplexed PDSCH. Further, the eRedCap terminal can appropriately execute the operation related to the HARQ feedback of the multicast MBS-PDSCH.

That is, in the wireless communication system, the terminal with reduced functions can support the MBS (Multicast-Broadcast Services) function.

(Device Configuration)

Next, an example of the functional configuration of the base station 10 and the terminal 20 that execute the processes and operations described above will be described. The base station 10 and the terminal 20 include functions that implement the above-described embodiments. However, the base station 10 and the terminal 20 may each have only a part of the functions in the embodiments.

<Base Station 10>

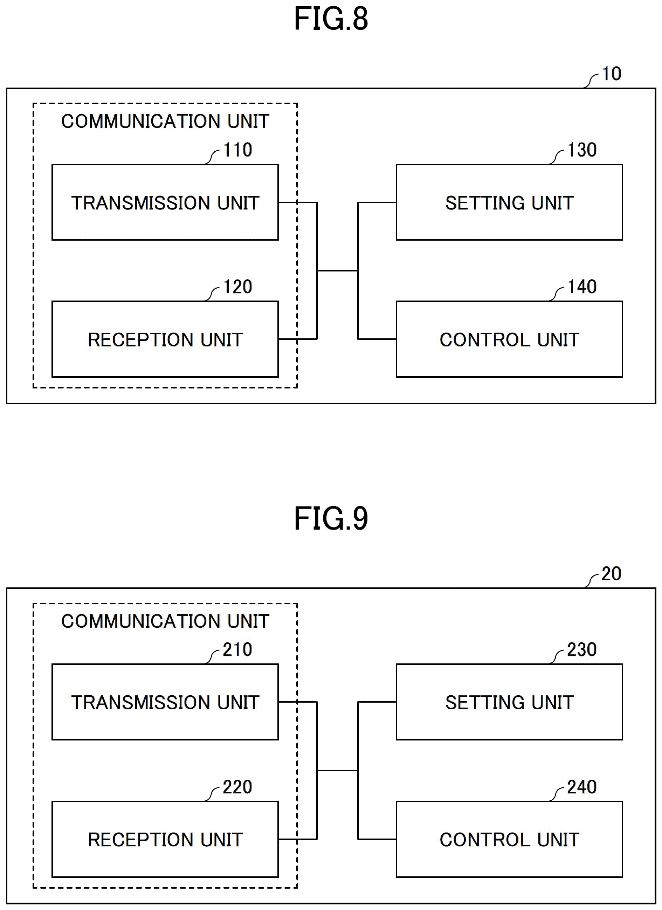

FIG. 8 is a diagram showing an example of the functional configuration of the base station 10 according to the embodiment of the present invention. As shown in FIG. 8, the base station 10 includes a transmission unit 110, a reception unit 120, a setting unit 130, and a control unit 140. The functional configuration shown in FIG. 8 is only an example. As long as the operation according to the embodiment of the present invention can be executed, the functional classification and the name of the functional unit may be any.

The transmission unit 110 includes a function of generating a signal to be transmitted to the terminal 20 and wirelessly transmitting the signal. The transmission unit 110 also transmits an inter-network node message to another network node. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signals and the like to the terminal 20. The reception unit 120 receives network inter-node messages from other network nodes.

The setting unit 130 stores preset setting information and various kinds of setting information to be transmitted to the terminal 20. The contents of the setting information are, for example, information related to the MBS function.

The control unit 140 performs control for realizing the function described in the embodiment. The control unit 140 also performs control related to the MBS function as described in the embodiment. A functional unit related to signal transmission in the control unit 140 may be included in the transmission unit 110, and a functional unit related to signal reception in the control unit 140 may be included in the reception unit 120.

<Terminal 20>

FIG. 9 is a diagram showing an example of the functional configuration of the terminal 20 according to the embodiment of the present invention. As shown in FIG. 9, the terminal 20 includes a transmission unit 210, a reception unit 220, a setting unit 230, and a control unit 240. The functional configuration shown in FIG. 9 is only an example. As long as the operation according to the embodiment of the present invention can be executed, the functional classification and the name of the functional unit may be anything.

The transmission unit 210 creates a transmission signal from the transmission data and wirelessly transmits the transmission signal. The reception unit 220 wirelessly receives various signals and acquires a signal of a higher layer from the received signal of a physical layer. The reception unit 220 also has a function of receiving NR-PSS, NR-SSS, NR-PBCH, DL/UL/SL control signals and the like transmitted from the base station 10. Further, for example, the transmission unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel) and the like to another terminal 20 as D2D communication, and the reception unit 220 receives PSCCH, PSSCH, PSDCH, PSBCH and the like from another terminal 20.

The setting unit 230 stores various kinds of setting information received from the base station 10 by the reception unit 220. The setting unit 230 also stores setting information set in advance. The contents of the setting information are, for example, information related to the MBS function.

The control unit 240 performs control for realizing the function described in the embodiment. The control unit 240 also performs control related to the MBS function as described in the embodiment. A functional unit related to signal transmission in the control unit 240 may be included in the transmission unit 210, and a functional unit related to signal reception in the control unit 240 may be included in the reception unit 220.

(Hardware structure)

The block diagrams that have been used to describe the above embodiments (FIG. 8 and FIG. 9) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception unit, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, the functional block (component) to implement a function of transmission may be referred to as a transmission unit or a transmitter. The method for implementing each component is not particularly limited as described above.

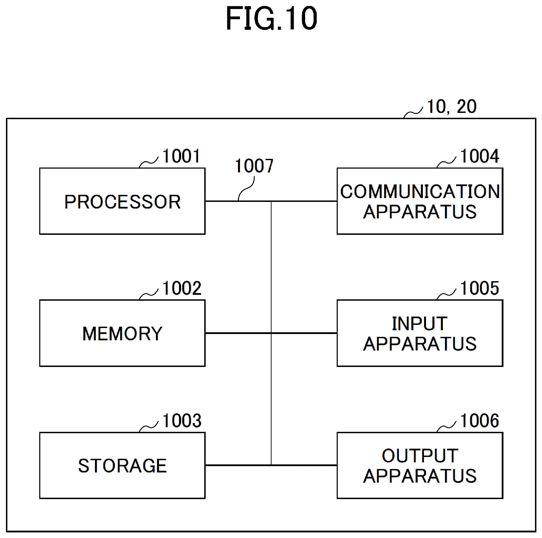

For example, the base station 10, the terminal 20, etc., according to an embodiment of the present disclosure may function as a computer for processing the radio communication method of the present disclosure. FIG. 10 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in FIG. 8 may be implemented by control programs that are stored in the memory 1002 and that operate on the processor 1001. Further, for example, the control unit 240 of the terminal 20 illustrated in FIG. 9 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/reception unit, the transmission line interface, and the like, may be implemented by the communication apparatus 1004. The transmitting/reception unit may be physically or logically divided into a transmission unit and a reception unit.

The input apparatus 1005 is an input device that receives input from the outside (for example, a keyboard, a mouse, a microphone, a switch, a button, a sensor, and so on). The output apparatus 1006 is an output apparatus that outputs something to the outside (e.g., display, speaker, LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

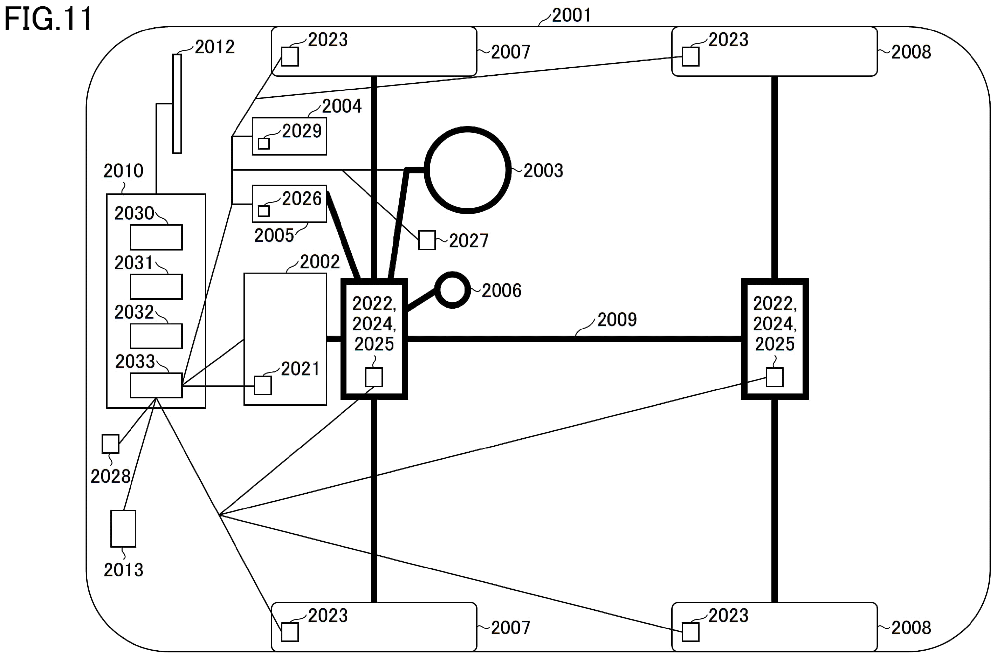

FIG. 11 shows a configuration example of the vehicle 2001. As shown in FIG. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each of the aspects/embodiments described in this disclosure may be applied to a communication device mounted on the vehicle 2001, for example, to the communication module 2013.

The drive unit 2002 includes, for example, an engine, a motor, or a hybrid of an engine and a motor. The steering unit 2003 includes at least a steering wheel (also referred to as a steering wheel), and is configured to steer at least one of the front wheel and the rear wheel based on the operation of the steering wheel operated by a user.

The electronic control unit 2010 includes a microprocessor 2031, a memory (ROM, RAM) 2032, and a communication port (IO port) 2033. The electronic control unit 2010 receives signals from various sensors 2021 to 2029 provided in the vehicle 2001. The electronic control unit 2010 may be referred to as an ECU (Electronic Control Unit).

The signals from the various sensors 2021 to 2029 include a current signal from a current sensor 2021 for sensing a motor current, a front wheel or rear wheel rotation speed signal acquired by a rotation speed sensor 2022, a front wheel or rear wheel air pressure signal acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, a shift lever operation signal acquired by a shift lever sensor 2027, and a detection signal for detecting an obstacle, a vehicle, a pedestrian, or the like acquired by an object detection sensor 2028.

The information service unit 2012 comprises various devices such as a car navigation system, an audio system, a speaker, a television, and a radio for providing (outputting) various information such as driving information, traffic information, and entertainment information, and one or more ECUs for controlling these devices. The information service unit 2012 provides various multimedia information and multimedia services to the occupant of the vehicle 2001 by using information acquired from an external device via the communication module 2013 or the like. The information service unit 2012 may include an input device (e.g. keyboard, mouse, microphone, switch, button, sensor, touch panel, etc.) for receiving an input from the outside, or may include an output device (For example, displays, speakers, LED lamps, touch panels, etc.) for outputting to the outside.

The driver assistance system unit 2030 is composed of various devices such as millimeter wave radar, LiDAR (Light Detection and Ranging), a camera, a positioning locator (e.g., GNSS, etc.), map information (e.g., high-definition (HD) maps, autonomous vehicle (AV) maps, etc.), a gyro system (For example, IMU (Inertial Measurement Unit), INS (Inertial Navigation System), etc.), an AI (Artificial Intelligence) chip, and an AI processor for providing functions for preventing accidents and reducing the driving load of the driver, and one or more ECUs for controlling these devices. The driver assistance system unit 2030 also transmits and receives various information via the communication module 2013 to realize a driver assistance function or an automatic driving function.

The communication module 2013 can communicate with the microprocessor 2031 and components of the vehicle 2001 via a communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 29 provided in the vehicle 2001 via the communication port 2033.

The communication module 2013 is a communication device which can be controlled by the microprocessor 2031 of the electronic control unit 2010 and which can communicate with an external device. For example, various kinds of information are transmitted and received with an external device via wireless communication. The communication module 2013 may be located either inside or outside the electronic control unit 2010. The external device may be, for example, a base station or a mobile station.

The communication module 2013 may transmit at least one of the signals input to the electronic control unit 2010 from the aforementioned various sensors 2021-2028, information obtained based on the signals, and information obtained based on an input from an external user via the information service unit 2012 to an external device via wireless communication. The electronic control unit 2010, the various sensors 2021-2028, and the information service unit 2012 may be referred to as an input unit for receiving an input. For example, the PUSCH transmitted by the communication module 2013 may include information based on the input.

The communication module 2013 receives various pieces of information (Traffic information, signal information, distance information, etc.) transmitted from the external device and displays them to the information service unit 2012 provided in the vehicle 2001. The information service unit 2012 may be referred to as an output unit for outputting information (For example, based on the PDSCH (or data/information decoded from the PDSCH) received by the communication module 2013, information is output to a device such as a display or a speaker.). The communication module 2013 also stores various pieces of information received from the external device in the memory 2032 available by the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029 and the like provided in the vehicle 2001.

(Summary of Embodiments)

As described above, according to the embodiment of the present invention, a terminal is provided which has a reception unit for receiving, from a base station, system information and a control unit for setting a CFR (Common Frequency Resource) related to an individual broadcast MBS (Multicast-Broadcast Services) function for a terminal whose function is reduced based on the system information, wherein the reception unit receives a DCI (Downlink Control Information) by monitoring a search space in the CFR, receives DCI (Downlink Control Information), and receives, from the base station, a group common PDSCH (Physical Downlink Shared Channel) scheduled by the DCI.

According to the configuration described above, the terminal 20 which is an eRedCapUE can individually set a CFR corresponding to a terminal capability and receive a transmission from the base station 10 by the MBS function. That is, in a wireless communication system, a terminal whose function is reduced can support the MBS (Multicast-Broadcast Services) function.

The control unit may set the CFR within a band of an individual initial BWP (Bandwidth Part) for a terminal whose function is reduced. According to the configuration described above, an individual CFR can be set for an eRedCap terminal.

The control unit may set the CFR outside a band of an initial BWP for a terminal other than the terminal whose function is reduced. According to this configuration, an individual CFR can be set in the eRedCap terminal.

The control unit may set an individual CORESET (control resource set) for the terminal whose function is reduced, for the broadcast MBS, based on the system information. According to this configuration, an individual CORESET can be set in the eRedCap terminal.

The control unit may assume that the CFR does not include a CORESET#0 (control resource set #0) when the CFR does not include a band of an initial BWP for a terminal other than the terminal whose function is reduced. According to this configuration, the eRedCap terminal can assume that the CORESET#0 is not set in the CFR.

Further, according to an embodiment of the present invention, there is provided a communication method in which a terminal executes a procedure for receiving system information from a base station, a procedure for setting a CFR (Common Frequency Resource) related to an individual broadcast MBS (Multicast-Broadcast Services) function for the terminal whose function is reduced based on the system information, and a procedure for monitoring a search space in the CFR to receive a DCI (Downlink Control Information), and receiving, from the base station, a group common PDSCH (Physical Downlink Shared Channel) scheduled by the DCI.

According to the above configuration, the terminal 20 as an eRedCapUE can individually set the CFR corresponding to the terminal capability and receive the transmission from the base station 10 by the MBS function. That is, in the wireless communication system, the terminal with reduced functions can support the MBS (Multicast-Broadcast Services) function.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system(6G), xth generation mobile communication system(xG) (xG (x is, for example, an integer number, a decimal number)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, created, defined therefrom. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10.

However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Device", "Fixed Station", "NodeB", "eNodeB (eNB)", "gNodeB (gNB)", "Access Point", "Transmission Point", "Reception unit Point", "Transmission/Reception unit Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. Further, a mobile station that is not moving is also included. Examples of the moving object include, but are not limited to, a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone (registered trademark), a multicopter, a quadcopter, a balloon, and an object mounted on any of these. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission or reception unit of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for terminals 20, scheduling of allocating radio resources (such as a frequency bandwidth and transmit power available for each terminal 20) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (Res). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). For the UE, one or more BWPs may be configured in one carrier.

At least one of the configured BWPs may be activated, and the UE may assume that the UE will not transmit and receive signals/channels outside the activated BWP. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

DESCRIPTION OF THE REFERENCE NUMERALS

| 10 | base station |
| 110 | transmission unit |
| 120 | reception unit |
| 130 | setting unit |
| 140 | control unit |
| 20 | terminal |
| 210 | transmission unit |
| 220 | reception unit |
| 230 | setting unit |
| 240 | control unit |
| 30 | core network |
| 1001 | processor |
| 1002 | memory |
| 1003 | storage |
| 1004 | communication apparatus |
| 1005 | input apparatus |
| 1006 | output apparatus |
| 2001 | vehicle |
| 2002 | drive unit |
| 2003 | steering unit |
| 2004 | accelerator pedal |
| 2005 | brake pedal |
| 2006 | shift lever |
| 2007 | front wheel |
| 2008 | rear wheel |
| 2009 | axle |
| 2010 | electronic control unit |
| 2012 | information service unit |
| 2013 | communication module |
| 2021 | current sensor |
| 2022 | rotation speed sensor |
| 2023 | air pressure sensor |
| 2024 | vehicle speed sensor |
| 2025 | acceleration sensor |
| 2026 | brake pedal sensor |
| 2027 | shift lever sensor |
| 2028 | object detection sensor |
| 2029 | accelerator pedal sensor |
| 2030 | driver assistance system unit |
| 2031 | microprocessor |

2032    memory (ROM, RAM)
2033    communication port (IO port)

**Claims**

1.  A terminal comprising:

    a reception unit configured to receive system information from a base station; and
    a control unit configured to set a CFR (Common Frequency Resource) related to an individual broadcast MBS (Multicast-Broadcast Services) function for a terminal whose function is reduced, based on the system information, wherein
    the reception unit receives a DCI (Downlink Control Information) by monitoring a search space in the CFR, and receives, from the base station, a group common PDSCH (Physical Downlink Shared Channel) scheduled by the DCI.

2.  The terminal according to claim 1, wherein the control unit sets the CFR within a band of an individual initial BWP (Bandwidth Part) for the terminal whose function is reduced.

3.  The terminal according to claim 1, wherein the control unit sets the CFR outside a band of an initial BWP for a terminal other than the terminal whose function is reduced.

4.  The terminal according to claim 1, wherein the control unit sets an individual CORESET (control resource set) for the terminal whose function is reduced, for the broadcast MBS, based on the system information.

5.  The terminal according to claim 1, wherein the control unit assumes that the CFR does not include a CORESET#0 (control resource set #0) when the CFR does not include a band of an initial BWP for a terminal other than the terminal whose function is reduced.

6.  A communication method executed by a terminal, the communication method comprising:

    receiving system information from a base station;
    setting a CFR (Common Frequency Resource) related to an individual broadcast MBS (Multicast-Broadcast Services) function for a terminal whose function is reduced, based on the system information: and
    monitoring a search space in the CFR to receive DCI (Downlink Control Information), and receiving, from the base station, a group common PDSCH (Physical Downlink Shared Channel) scheduled by the DCI.

FIG.1

DL TRANSMISSION

UL TRANSMISSION

20

10

CELL

# FIG.2

EP 4 761 439 A1

# FIG.3

# FIG.4

SIB20

MCCH (MBS CONTROL CHANNEL)
(SCHEDULING BY DCI FORMAT
4.0 ASSOCIATED WITH CRC
SCRAMBLED BY MCCH-RNTI)

MTCH (MBS TRAFFIC CHANNEL)
(SCHEDULING BY DCI FORMAT
4.0 ASSOCIATED WITH CRC
SCRAMBLED BY G-RNTI)

gNB

BROADCAST

UE

...    ...

SIB20
·POSITION AND
 BANDWIDTH OF
 FREQUENCY DOMAIN
 OF CFR
·CORESET
·PDSCH SETTING
 FOR MCCH

MCCH
·G-RNTI FOR MTCH
·PDSCH SETTING
 FOR MTCH
·DRX SETTING

EP 4 761 439 A1

# FIG.5

FREQUENCY

unicast PDSCH

LESS THAN OR EQUAL TO 5 MHz

MBS PDSCH

UNICAST + MBS PDSCH EXCEEDS 5 MHz

SLOT

TIME

EP 4 761 439 A1

# FIG.6

| IN SLOT TDM | | IN SLOT FDM (UC vs MC/BC) |
|---|---|---|
| (UC vs MC/BC) | (MC/BC vs MC/BC) | |
| SLOT | SLOT | SLOT |

UNICAST PDSCH

GROUP COMMON PDSCH (MULTICAST)

GROUP COMMON PDSCH (BROADCAST)

# FIG.7

WAITING TIME UNTIL SAME HARQ PROCESS NUMBER AS
THE TIME WHEN FEEDBACK IS ENABLED BECOMES USABLE

WAITING TIME UNTIL SAME HARQ PROCESS
NUMBER AS THE TIME WHEN FEEDBACK IS
DISABLED BECOMES USABLE $\geq T_{proc,1}$

HARQ
PROCESS
NUMBER

SLOT

DL | | |1|2|3| | |2|3| | | | | | | | | | | | | | | | | | | | |1| | | | | | | | | | |

PDCCH/PDSCH

PDCCH/PDSCH

UL

PUCCH

EP 4 761 439 A1

# FIG.8

COMMUNICATION UNIT

TRANSMISSION UNIT 110

RECEPTION UNIT 120

SETTING UNIT 130

CONTROL UNIT 140

10

# FIG.9

COMMUNICATION UNIT

TRANSMISSION UNIT 210

RECEPTION UNIT 220

SETTING UNIT 230

CONTROL UNIT 240

20

# FIG.10

10, 20

1001
PROCESSOR

1007

1004
COMMUNICATION APPARATUS

1002
MEMORY

1005
INPUT APPARATUS

1003
STORAGE

1006
OUTPUT APPARATUS

FIG.11

## INTERNATIONAL SEARCH REPORT

| International application No. |
|---|
| **PCT/JP2023/029375** |

| A. | CLASSIFICATION OF SUBJECT MATTER |
|---|---|

*H04W 72/30*(2023.01)i; *H04W 4/06*(2009.01)i
FI:   H04W72/30; H04W4/06 150

According to International Patent Classification (IPC) or to both national classification and IPC

| B. | FIELDS SEARCHED |
|---|---|

Minimum documentation searched (classification system followed by classification symbols)

H04W72/30; H04W4/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | Huawei, CBN, HiSilicon, Discussion on the CFR for Redcap UE, 3GPP TSG RAN WG2 #122 R2-2304822, 12 May 2023<br>section 2 | 1-6 |
| A | Nokia, Nokia Shanghai Bell, RedCap CFR for MBS Broadcast, 3GPP TSG RAN WG2 #121bis-e R2-2304061, 07 April 2023<br>section 2 | 1-6 |
| A | Qualcomm, Ericsson, Verizon, FirstNet, RedCap CFR for MBS broadcast, 3GPP TSG RAN WG2 #121 R2-2300797, 17 February 2023<br>section 2 | 1-6 |

☐ Further documents are listed in the continuation of Box C.        ☐ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 January 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V17.5.0*, June 2023
- *3GPP TS 38.213 V17.6.0*, June 2023
- *3GPP TS 38.214 V17.6.0*, June 2023
- *3GPP TS 38.331 V17.5.0*, June 2023
- *3GPP TS 38.321 V17.5.0*, June 2023